# EUROPÄISCHE PATENTSCHRIFT

(11) **EP 4 134 206 B1**
(45) Veröffentlichungstag und Bekanntmachung des Hinweises auf die Patenterteilung: **22.11.2023**
(21) Anmeldenummer: 22000208.3
(22) Anmeldetag: 28.03.2017
(51) Int. Cl.: B25J 5/00, B25J 9/16, B25J 19/04, B25J 13/08

(54) **FERTIGUNGSANLAGE UND VERFAHREN ZUM BETREIBEN EINER FERTIGUNGSANLAGE**
PRODUCTION SYSTEM AND METHOD FOR OPERATING A PRODUCTION SYSTEM
INSTALLATION DE FABRICATION ET PROCÉDÉ DE FONCTIONNEMENT D'UNE INSTALLATION DE FABRICATION

(30) Priorität: 22.04.2016 DE 102016004975
(43) Veröffentlichungstag der Anmeldung: 15.02.2023
(62) Teilanmeldung aus: 17714644.6
(73) Patentinhaber: SEW-EURODRIVE GmbH & Co. KG, 76646 Bruchsal (DE)
(72) Erfinder: Soder, Johann, D-76707 Hambrücken (DE)

(56) Entgegenhaltungen:
- DE-A1-102014 217 352
- US-B1- 6 430 473
- Martin Hägele ET AL: "Robot Assistants at Manual Workplaces: Effective Co-operation and Safety Aspects", Proceedings of the 33rd ISR (International Symposium on Robotics, 11. Oktober 2002 (2002-10-11), XP055384475, Gefunden im Internet: URL:https://pdfs.semanticscholar.org/57d1/ 758d9b6f2e08cd44d10335da992e9089786e.pdf [gefunden am 2017-06-23]
- F Lange ET AL: "Montage am kontinuierlich bewegten Band", VDI-Bericht 2012, 22. Oktober 2008 (2008-10-22), XP055384037, München Gefunden im Internet: URL:http://elib.dlr.de/55730/1/montage_rob otik08_langfassung.pdf [gefunden am 2017-06-22]
- NTDTV: "Move Over, Rover - Here Comes Justin the Robot", youtube, 6. Juni 2011 (2011-06-06), Seite 1 pp., XP054977479, Gefunden im Internet: URL:https://www.youtube.com/watch?v=kBAqsT pcHEE [gefunden am 2017-06-26]
- SCHRAFT R D ET AL: "PowerMate - A Safe and Intuitive Robot Assistant for Handling and Assembly Tasks", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18. April 2005 (2005-04-18), Seiten 4074-4079, XP010871382, DOI: 10.1109/ROBOT.2005.1570745 ISBN: 978-0-7803-8914-4

## Beschreibung

Die Erfindung betrifft eine Fertigungsanlage und ein Verfahren zum Betreiben einer Fertigungsanlage.

Es ist allgemein bekannt, dass bei einer Fertigungsanlage zur Herstellung eines Produktes Komponenten zu verbinden sind.

**Aus** Martin Hägele ET AL: "Robot Assistants at Manual Workplaces: Effective Cooperation and Safety Aspects", Proceedings of the 33rd ISR, 11. Oktober 2002 **ist als nächstliegender Stand der Technik ein Assistenzroboter bekannt.**

**Aus** F Lange ET AL: "Montage am kontinuierlich bewegten Band", VDI-Bericht 2012, 22. Oktober 2008 **ist eine Fertigungsanlage mit Band bekannt.**

**Aus** NTDTV: "Move Over, Rover - Here Comes Justin the Robot", youtube, 6. Juni 2011 **ist ein Roboter bekannt.**

**Aus der** DE 10 2014 217352 **ist eine verfahrbare Vorrichtung zur Manipulation von Gegenständen bekannt.**

Aus SCHRAFT R D ET AL: "PowerMate - A Safe and Intuitive Robot Assistant for Handling and Assembly Tasks", Proceedings of the 2005 IEEE ICRA, 18-22 APRIL 2005 **ist ein intuitives Robotersystem bekannt.**

**Aus der** US 6 430 473 B1 **ist ein Assistenzroboter bekannt.**

Der Erfindung liegt daher die Aufgabe zugrunde, eine ergonomische Fertigungsanlage weiterzubilden.

Erfindungsgemäß wird die Aufgabe bei der Fertigungsanlage nach den in Anspruch 1 und bei dem Verfahren nach den in Anspruch 7 angegebenen Merkmalen gelöst.

Wichtige Merkmale der Erfindung bei der Fertigungsanlage zur Herstellung eines Produktes, insbesondere Getriebemotors, aus einer ersten Komponente, insbesondere Elektromotor, und aus einer zweiten Komponente, insbesondere Getriebe, sind, dass die Fertigungsanlage einen Roboterarm aufweist, welcher auf einem insbesondere auf einem Boden der Fertigungsanlage, verfahrbaren Fahrzeug angeordnet ist,
wobei ein Sensorring mit dem Roboterarm verbunden ist zur kraftarmen Führung einer vom Roboterarm aufgenommenen ersten Komponente.

Von Vorteil ist dabei, dass eine ergonomische Fertigung ausführbar ist. Denn der Bediener muss nur geringen Kraftaufwand aufbringen, auch wenn Komponenten mit großer Masse zu bewegen sind. Das Fahrzeug fungiert dabei als Assistent und bewegt die schwere Masse gemäß der Vorgabe des Bedieners. Mit anderen Worten ausgedrückt, ist die erfindungsgemäße Fertigungsanlage mit fahrbarem Roboterarm als Assistent bei der Montage vorgesehen, wobei eine erste Komponente vom Roboterarm aufgenommen und zu einem Bediener gefahren wird, der dann durch Führen eines am Roboterarm befestigten Sensorrings die erste Komponente zu einer stationär gelagerten zweiten Komponente heranführt und die beiden Kompoenten verbindet.

Bei einer vorteilhaften Ausgestaltung ist eine Bilderkennungseinheit auf dem Fahrzeug angeordnet, welche mit der den Roboterarm steuernden Steuerung verbunden ist,
insbesondere wobei mittels der Bilderkennungseinheit eine erste Komponente erkennbar ist und somit der Roboterarm zum Aufnehmen der ersten Komponente entsprechend steuerbar ist. Von Vorteil ist dabei, dass mittels der Bilderkennungseinheit eine erste Komponente erkennbar ist. Beispielsweise werden die Komponenten in einem Behältnis angeliefert und mittels der Bilderkennungseinheit erkannt, so dass die erste Komponente mittels des Greifwerkzeugs des Roboterarms aufnehmbar ist.

Bei einer vorteilhaften Ausgestaltung weist der Roboterarm mehrere Antriebe auf, welche mit der Steuerung verbunden sind, welche eingerichtet ist, die Bewegung des Roboterarm zu steuern. Von Vorteil ist dabei, dass der Roboterarm als Assistenz fungiert.

Bei einer vorteilhaften Ausgestaltung ist ein Eingabemittel zum wahlweisen Betrieb des Antriebs des Fahrzeugs oder der Antriebe des Roboterarms vorgesehen,
wobei bei Auswahl des Betriebs des Antriebs des Fahrzeugs der Antrieb das Fahrzeug auf eine Sollposition hinsteuert, welche abhängig vom Signal des Sensorrings verschoben wird, und die Antriebe des Roboterarms ihre jeweilige Position, insbesondere Winkelposition, beibehalten,
wobei bei Auswahl des Betriebs der Antriebe des Roboterarms diese Antriebe auf eine jeweilige Sollposition, insbesondere jeweilige Winkelposition, hinsteuert, welche abhängig vom Signal des Sensorrings verschoben werden, und der Antrieb des Fahrzeugs seine Position beibehält und/oder eine Bremse des Fahrzeugs aktiviert ist. Von Vorteil ist dabei, dass entweder das Fahrzeug bei steif gestelltem Roboterarm verschiebbar ist oder dass der Roboterarm bewegbar ist bei fest positioniertem Fahrzeug.

Erfindungsgemäß ist die aufgenommene erste Komponente mittels des Roboterarms zu einer stationär gelagerten, zweiten Komponente hin führbar und an dieser zentrierbar ohne wesentlichen Kraftaufwand, insbesondere zum Verbinden, insbesondere Schraubverbinden, der ersten mit der zweiten Komponente. Von Vorteil ist dabei, dass ein ergonomisches Arbeiten, insbesondere ohne großen Kraftaufwand, ermöglicht ist.

Erfindungsgemäß weist das Fahrzeug eine Sekundärwicklung auf, welche zur Übertragung elektrischer Energie mit einem am Boden angeordneten Primärleiter induktiv koppelbar ist, insbesondere zur resonanten Übertragung elektrischer Energie. Von Vorteil ist dabei, dass eine berührungslose Energieversorgung ermöglicht ist.

Bei einer vorteilhaften Ausgestaltung ist der Sekundärwicklung eine derartige Kapazität in Reihe oder parallel zugeschaltet, dass die Resonanzfrequenz des so gebildeten Schwingkreises der Frequenz des in den Primärleiter eingeprägten Wechselstroms entspricht. Von Vorteil ist dabei, dass ein hoher Wirkungsgrad trotz schwacher Kopplungsstärke erreichbar ist.

**Erfindungsgemäß** ist der Primärleiter als Primärwicklung ausgeführt, so dass das Fahrzeug nur in einem ersten Raumbereich aus dem Primärleiter induktiv versorgbar ist,
wobei das Fahrzeug einen Energiespeicher aufweist zur Versorgung des Fahrzeugs außerhalb des Raumbereichs. Von Vorteil ist dabei, dass der Boden der Anlage nur geringfügig bearbeitet werden muss.

Bei einer vorteilhaften Ausgestaltung weist der Roboterarm ein Greifwerkzeug auf, wobei das Greifwerkzeug von der Steuerung steuerbar ist. Von Vorteil ist dabei, dass die erste Komponente vom Greifwerkzeug aufnehmbar ist und somit vom Roboterarm transportierbar ist.

**Erfindungsgemäß** ist der Energiespeicher ein Doppelschichtkondensator, insbesondere Ultracap. Von Vorteil ist dabei, dass ein schnelles Aufladen ausführbar ist, also hohe Ladeströme erlaubt sind.

Wichtige Merkmale bei dem Verfahren zum Betreiben einer Fertigungsanlage sind, dass ein Eingabemittel zum Auswählen einer ersten, zweiten oder dritten Betriebsart vorhanden ist, so dass abhängig von der Betätigung des Eingabemittels
- in einer ersten Betriebsart das Fahrzeug samt Roboterarm autonom betrieben wird, insbesondere von der Steuerung gesteuert wird,
- in einer zweiten Betriebsart ein derartiges Mensch-geführtes Betreiben ausgeführt wird, dass abhängig von den Sensorsignalen des Sensorrings die für den Antrieb des Fahrzeugs vorgegebene Sollposition verändert wird, wobei als jeweilige Sollpositionen der jeweiligen Antriebe des Roboterarms konstante Werte vorgegeben werden, insbesondere die bei Betätigen des Eingabemittels zum Auswählen der zweiten Betriebsart vorhandenen Istpositionen der jeweiligen Antriebe des Roboterarms als Sollpositionen der jeweiligen Antriebe des Roboterarms,
- in einer dritten Betriebsart ein derartiges Mensch-geführtes Betreiben ausgeführt wird, dass abhängig von den Sensorsignalen des Sensorrings die jeweiligen Sollpositionen der jeweiligen Antriebe des Roboterarms verändert werden, wobei eine Bremse des Fahrzeugs betätigt wird und/oder als Sollposition für den Antrieb des Fahrzeugs ein konstanter Wert vorgegeben wird, insbesondere die bei Betätigen des Eingabemittels zum Auswählen der dritten Betriebsart vorhandene Istposition des Antriebs des Fahrzeugs als Sollposition des Antriebs des Fahrzeugs.

Von Vorteil ist dabei, dass in der ersten Betriebsart ein automatisches Erkennen und Aufnehmen einer Komponente ausführbar ist und dann ein automatisches Herantransportieren ausführbar ist. danach ist vom Bediener ein Mensch-geführtes Verfahren des Fahrzeugs mit steif gestelltem Roboterarm ausführbar, also die zweite Betriebsart, oder alternativ vom Bediener ein Mensch-geführtes Bewegen des Roboterarms mit fixiertem Fahrzeug, also die dritte Betriebsart.

Bei einer vorteilhaften Ausgestaltung werden in der zweiten und in der dritten Betriebsart die Antriebe des Roboterarms und/oder der Antrieb des Fahrzeugs in Lageregelung betrieben, insbesondere also jedem der Antriebe jeweils eine Sollposition vorgegeben wird und die jeweilige Istposition des jeweiligen Antriebs erfasst wird und auf die Sollposition hin geregelt wird, insbesondere indem der Antrieb ein von dem zeitlichen Verlauf der Differenz zwischen Istposition und Sollposition abhängiges Drehmoment erzeugt. Von Vorteil ist dabei, dass im autonomen Betrieb keine Lageregelung, sondern beispielsweise eine Drehmomentenregelung oder eine Drehzahlregelung ausführbar ist. Erst bei Mensch-geführten Betriebsarten wird die Lageregelung ausgeführt, wobei die Sollposition vom Menschen mittels des Sensorrings veränderbar ist, insbesondere verschiebbar.

Weitere Vorteile ergeben sich aus den Unteransprüchen.

Die Erfindung wird nun anhand von Abbildungen näher erläutert:

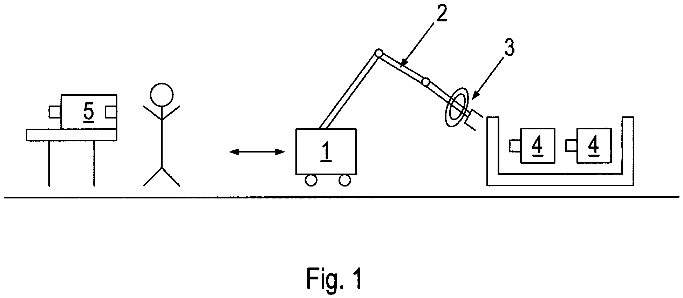

In der Figur 1 ist eine Fertigungsanlage zur Herstellung eines Produktes, insbesondere Getriebemotors, aus einer ersten Komponente, insbesondere Elektromotor 4, und aus einer zweiten Komponente, insbesondere Getriebe 5, schematisch skizziert.

Hierbei sind die ersten Komponenten 4 in einem Behältnis vorrätig gehalten, aus dem sie mittels eines Roboterarms 2, an welchem ein Greifwerkzeug angeordnet ist, entnehmbar sind.

Das Aufnehmen der ersten Komponente 4 wird dabei von einer Steuerung gesteuert, der auch die Signale einer Bilderkennungseinheit zugeführt werden. Somit greift das Werkzeug eine der ersten Komponenten 4 aus dem Behältnis heraus.

Da der Roboterarm 2 auf einem bodengängig verfahrbaren Fahrzeug 1 angeordnet ist, ist der Roboterarm 2 samt aufgenommener erster Komponente 4 verfahrbar angeordnet und zu einem Arbeitsbereich eines Bedieners hin verfahrbar. Hierzu weist das Fahrzeug 1 einen Antrieb auf.

Auf einem Werktisch ist eine zweite Komponente 5, beispielsweise ein Getriebe, angeordnet. Diese zweite Komponente 5 muss mit der ersten Komponente 4 verbunden werden. Im Beispiel werden die erste und zweite Komponente (4, 5) aneinander zentriert und dann schraubverbunden.

Wie oben beschrieben, ist das Fahrzeug zunächst samt Roboterarm 2 in autonomem Betrieb. Mittels der Bilderkennungseinheit wird die erste Komponente 4 in dem Vorrat, also Behältnis, erkannt und vom Roboterarme 2 aufgenommen. Das Fahrzeug 1 fährt danach eine Wegstrecke, um näher an den Bediener oder die vorgesehene Startposition zu gelangen.

Der Bediener, also Arbeiter und/oder Werker, betätigt ein Eingabemittel, wobei er zumindest eines von zwei Mensch-geführten Betriebsarten auswählt. Dabei ist die von ihm zunächst ausgewählte Betriebsart ein Bewegen des Fahrzeugs 1, wobei der Roboterarm 2 unbeweglich gehalten wird. Hierzu zieht der Bediener am Sensorring mit einer kleinen Kraft, so dass das Fahrzeug entsprechend diesem Ziehen sich bewegt. Dabei wird das Sensorsignal des Sensorrings 3 der Steuerung zugeführt, welche den Antrieben des Roboterarms 2 vorgibt, in ihrer jeweiligen Winkelposition zu verbleiben, also die jeweils bei Betätigen des Eingabemittels erfassten Istpositionen als Sollpositionen für die Antriebe des Roboterarms 2 vorgibt. Die Einwirkung des Bedieners auf den Sensorring 3 bewirkt also nur ein davon abhängiges Verfahren des Antriebs des Fahrzeugs. Beispielsweise kann der Bediener das Fahrzeug 1 in dieser Betriebsart zu sich näher heranziehen oder zu einer gewünschten Position verschieben, wobei nur ein sehr geringer Kraftaufwand notwendig ist, nämlich die Betätigung des Sensorrings 3.

Danach betätigt der Bediener wiederum das Eingabemittel, so dass die andere der beiden Mensch-geführten Betriebsarten ausgewählt wird. Hierbei wird die Bremse des Fahrzeugs 1 betätigt und/oder der beim Betätigen des Eingabemittels vorhandene Istwert der Position des Antriebs des Fahrzeugs 1 als Sollposition für den Antrieb des Fahrzeugs 1 vorgegeben. Somit bleibt das Fahrzeug 1 stehen. Der Bediener berührt den mit dem Roboterarm 2 verbundenen Sensorring 3 und führt dann mit äußerst wenig Aufwand an Kraft und/oder Drehmoment den Roboterarm 2 samt der aufgenommenen ersten Komponente 4 zur zweiten Komponente 5. Dabei ist vom Bediener eine relative Feinjustierung und Zentrierung der beiden Komponenten (4, 5) relativ zueinander mit diesem geringen Aufwand ausführbar.

Hierzu werden die vom Sensorring erfassten Sensorsignale der Steuerung zugeführt, welche den Roboterarm derart steuert, dass die aufgenommene zweite Komponente 5 entsprechend der Richtung der detektierten Kraft bewegt wird, wobei Masse beziehungsweise Trägheitsmoment für den Bediener effektiv vermindert erscheinen. Somit ist der Bediener in der Lage, eine erste Komponente 4, welche eine sehr große Masse aufweist, mit äußerst geringem Kraftaufwand an die zweite Komponente 5 heranzuführen und dann die Verbindung der beiden Komponenten (4, 5) zu einem Produkt, insbesondere Schraubverbindung, mit geringem Aufwand auszuführen. Hierzu werden die Antriebe des Roboterarms 2 auf Sollwerte hin geregelt, welche entsprechend der Sensorsignale des Sensorrings 3 verändert werden.

Somit ist mittels des Eingabemittels zwischen der autonomen und den beiden Mensch-geführten Betriebsarten umschaltbar.

Das Fahrzeug ist an seiner Unterseite mit einer Sekundärwicklung vorgesehen, welche induktiv koppelbar ist mit einem am Boden verlegten Primärleiter, der mit einem mittelfrequenten Wechselstrom beaufschlagbar ist. Die Mittelfrequenz liegt hierbei vorzugsweise zwischen 10 kHz und 1000 kHz. Der Sekundärwicklung ist eine derartige Kapazität in Reihe und/oder seriell zugeschaltet, dass die Resonanzfrequenz des so gebildeten Schwingkreises im Wesentlichen der Frequenz des in den Primärleiter eingeprägten Wechselstroms entspricht.

Somit ist eine induktive Versorgung des Fahrzeugs 1 ermöglicht.

Der Primärleiter ist entlang der Fahrstrecke des Fahrzeugs am Boden verlegt.

Bei einem weiteren erfindungsgemäßen Ausführungsbeispiel ist der Primärleiter als Wicklung ausgeführt, insbesondere als Ringwicklung.

Somit muss der Boden nicht langgestreckt entlang der Fahrbahn des Fahrzeugs aufgefräst werden zur Ermöglichung der Verlegung des Primärleiters, sondern nur im Bereich des kompakten Bereiches der Wicklung. In demjenigen Raumbereich um die Wicklung herum, in welchem eine ausreichende induktive Kopplung zwischen Primärwicklung und Sekundärwicklung des Fahrzeugs erreichbar ist, ist somit der Energiespeicher des Fahrzeugs beladbar und außerhalb des genannten Raumbereichs ist das Fahrzeug, insbesondere dessen Antrieb, die Steuerung und die Antriebe des Roboterarms, aus dem Energiespeicher versorgbar.

### Bezugszeichenliste

1 Fahrzeug mit Roboterarm
2 Roboterarm
3 Sensorring
4 Elektromotor
5 Getriebe

## Patentansprüche

1. Fertigungsanlage zur Herstellung eines Produktes, insbesondere Getriebemotors, aus einer ersten Komponente, insbesondere Elektromotor (4), und aus einer zweiten Komponente, insbesondere Getriebe,
wobei die Fertigungsanlage einen Roboterarm (2) aufweist, welcher auf einem auf einem Boden der Fertigungsanlage verfahrbaren Fahrzeug (1) angeordnet ist,
wobei ein Sensorring (3) mit dem Roboterarm (2) verbunden ist zur kraftarmen Führung einer vom Roboterarm (2) aufgenommenen ersten Komponente,
wobei die aufgenommene erste Komponente mittels des Roboterarms (2) zu einer stationär gelagerten, zweiten Komponente hin führbar und an dieser zentrierbar ist ohne wesentlichen Kraftaufwand,
insbesondere zum Verbinden, insbesondere Schraubverbinden, der ersten mit der zweiten Komponente,
**dadurch gekennzeichnet, dass**
das Fahrzeug (1) eine Sekundärwicklung aufweist, welche zur Übertragung elektrischer Energie mit einem am Boden angeordneten Primärleiter induktiv koppelbar ist, insbesondere zur resonanten Übertragung elektrischer Energie,
wobei der Primärleiter als Primärwicklung ausgeführt ist, so dass das Fahrzeug (1) nur in einem ersten Raumbereich aus dem Primärleiter induktiv versorgbar ist,
wobei das Fahrzeug (1) einen Energiespeicher aufweist zur Versorgung des Fahrzeugs (1) außerhalb des ersten Raumbereichs,
wobei der Energiespeicher ein Doppelschichtkondensator, insbesondere Ultracap, ist.

2. Fertigungsanlage nach Anspruch 1,
**dadurch gekennzeichnet, dass**
eine Bilderkennungseinheit auf dem Fahrzeug (1) angeordnet ist, welche mit der den Roboterarm (2) steuernden Steuerung verbunden ist,
insbesondere wobei mittels der Bilderkennungseinheit eine erste Komponente erkennbar ist und somit der Roboterarm (2) zum Aufnehmen der ersten Komponente entsprechend steuerbar ist.

3. Fertigungsanlage nach Anspruch 1 oder 2,
**dadurch gekennzeichnet, dass**
der Roboterarm (2) mehrere Antriebe aufweist, welche mit der Steuerung verbunden sind, welche eingerichtet ist, die Bewegung des Roboterarms (2) und/oder einen Antrieb des Fahrzeugs (1) zu steuern.

4. Fertigungsanlage nach einem der Ansprüche 1 bis 3,
**dadurch gekennzeichnet, dass**
ein Eingabemittel zum wahlweisen Betrieb des Antriebs des Fahrzeugs (1) oder der Antriebe des Roboterarms (2) aufweist,
wobei bei Auswahl des Betriebs des Antriebs des Fahrzeugs (1) der Antrieb das Fahrzeug (1) auf eine Sollposition hinsteuert, welche abhängig vom Signal des Sensorrings (3) verschoben wird, und die Antriebe des Roboterarms (2) ihre jeweilige Position, insbesondere Winkelposition, beibehalten,
wobei bei Auswahl des Betriebs der Antriebe des Roboterarms (2) diese Antriebe auf eine jeweilige Sollposition, insbesondere jeweilige Winkelposition, hinsteuert, welche abhängig vom Signal des Sensorrings (3) verschoben werden, und der Antrieb des Fahrzeugs (1) seine Position beibehält und/oder eine Bremse des Fahrzeugs (1) aktiviert ist.

5. Fertigungsanlage nach einem der Ansprüche 1 bis 4,
**dadurch gekennzeichnet, dass**
der Sekundärwicklung eine derartige Kapazität in Reihe oder parallel zugeschaltet ist, dass die Resonanzfrequenz des so gebildeten Schwingkreises der Frequenz des in den Primärleiter eingeprägten Wechselstroms entspricht.

6. Fertigungsanlage nach einem der Ansprüche 1 bis 5,
**dadurch gekennzeichnet, dass**
der Roboterarm (2) ein Greifwerkzeug aufweist, wobei das Greifwerkzeug von der Steuerung steuerbar ist.

7. Verfahren zum Betreiben einer Fertigungsanlage nach einem der vorangegangen Ansprüche zur Herstellung eines Produktes, insbesondere Getriebemotors, aus einer ersten Komponente, insbesondere Elektromotor (4), und aus einer zweiten, stationär gelagerten Komponente, insbesondere Getriebe,
wobei die Fertigungsanlage einen Roboterarm (2) aufweist, welcher auf einem insbesondere auf einem Boden der Fertigungsanlage, verfahrbaren Fahrzeug (1) angeordnet ist,
wobei ein Sensorring (3) mit dem Roboterarm (2) verbunden ist zur kraftarmen Führung einer vom Roboterarm (2) aufgenommenen ersten Komponente,
**dadurch gekennzeichnet, dass**
mittels eines Eingabemittels eine erste, zweite oder dritte Betriebsart derart ausgewählt wird, so dass abhängig von der Betätigung des Eingabemittels
- in einem ersten Verfahrensschritt in der ersten Betriebsart das Fahrzeug (1) samt Roboterarm (2) autonom betrieben wird, insbesondere von der Steuerung gesteuert wird,
- in einem zweiten auf den ersten Verfahrensschritt zeitlich nachfolgenden Verfahrensschritt in der zweiten Betriebsart ein derartiges Mensch-geführtes Betreiben ausgeführt wird, dass abhängig von den Sensorsignalen des Sensorrings (3) die für den Antrieb des Fahrzeugs (1) vorgegebene Sollposition verändert wird, wobei als jeweilige Sollpositionen der jeweiligen Antriebe des Roboterarms (2) konstante Werte vorgegeben werden, wobei die bei Betätigen des Eingabemittels zum Auswählen der zweiten Betriebsart vorhandenen Istpositionen der jeweiligen Antriebe des Roboterarms (2) als Sollpositionen der jeweiligen Antriebe des Roboterarms (2) vorgegeben wird,
- in einem dritten auf den zweiten Verfahrensschritt zeitlich nachfolgenden Verfahrensschritt in der dritten Betriebsart ein derartiges Mensch-geführtes Betreiben ausgeführt wird, dass abhängig von den Sensorsignalen des Sensorrings (3) die jeweiligen Sollpositionen der jeweiligen Antriebe des Roboterarms (2) verändert werden, wobei eine Bremse des Fahrzeugs (1) betätigt wird als Sollposition für den Antrieb des Fahrzeugs (1) ein konstanter Wert vorgegeben wird, wobei die bei Betätigen des Eingabemittels zum Auswählen der dritten Betriebsart vorhandene Istposition des Antriebs des Fahrzeugs (1) als Sollposition des Antriebs des Fahrzeugs (1) vorgegeben wird,
wobei die aufgenommene erste Komponente mittels des Roboterarms (2) zu der stationär gelagerten, zweiten Komponente hingeführt wird und an dieser zentriert wird ohne wesentlichen Kraftaufwand, zum Verbinden, insbesondere Schraubverbinden, der ersten mit der zweiten Komponente.

8. Verfahren nach Anspruch 7,
**dadurch gekennzeichnet, dass**
in der zweiten und in der dritten Betriebsart die Antriebe des Roboterarms (2) und/oder der Antrieb des Fahrzeugs (1) in Lageregelung betrieben werden,
insbesondere also jedem der Antriebe jeweils eine Sollposition vorgegeben wird und die jeweilige Istposition des jeweiligen Antriebs erfasst wird und auf die Sollposition hin geregelt wird, insbesondere indem der Antrieb ein von dem zeitlichen Verlauf der Differenz zwischen Istposition und Sollposition abhängiges Drehmoment erzeugt.

## Claims

1. Manufacturing facility for producing a product, in particular a gear motor, out of a first component, in particular an electric motor (4), and a second component, in particular a gearing,
wherein the manufacturing facility comprises a robot arm (2) arranged on a vehicle (1) that can travel on a floor of the manufacturing facility,
wherein a sensor ring (3) is connected to the robot arm (2) for guiding, in a manner requiring little force, a first component being held by the robot arm (2),
wherein the first component being held can be guided by means of the robot arm (2) towards a fixedly mounted second component and centred thereon without a significant exertion of force,
in particular in order to connect, in particular screw-connect, the first component to the second component,
**characterised in that**
the vehicle (1) comprises a secondary winding that can be inductively coupled to a primary conductor arranged on the floor for the purpose of transmitting electrical energy, in particular for transmitting electrical energy in a resonant manner,
wherein the primary conductor is configured as a primary winding such that the vehicle (1) can be inductively powered from the primary conductor only in a first spatial region,
wherein the vehicle (1) comprises an energy storage device for powering the vehicle (1) outside the first spatial region,
wherein the energy storage device is an electric double-layer capacitor, in particular an ultracapacitor.

2. Manufacturing facility according to claim 1,
**characterised in that**
an image recognition unit is arranged on the vehicle (1) and is connected to the controller that controls the robot arm (2),
in particular wherein a first component can be recognised by means of the image recognition unit, and the robot arm (2) can thus be controlled accordingly in order to take hold of the first component.

3. Manufacturing facility according to claim 1 or claim 2,
**characterised in that**
the robot arm (2) comprises a plurality of drives which are connected to the controller, which is configured to control the movement of the robot arm (2) and/or to control a drive of the vehicle (1).

4. Manufacturing facility according to any of claims 1 to 3,
**characterised in that**
an input means for operating either the drive of the vehicle (1) or the drives of the robot arm (2),
wherein, when operation of the drive of the vehicle (1) is selected, the drive controls the vehicle (1) towards a target position that is displaced depending on the signal from the sensor ring (3), and the drives of the robot arm (2) maintain their respective positions, in particular angular positions,
wherein, when operation of the drives of the robot arm (2) is selected, said drives control towards respective target positions, in particular respective angular positions, which are displaced depending on the signal from the sensor ring (3), and the drive of the vehicle (1) maintains its position and/or a brake of the vehicle (1) is activated.

5. Manufacturing facility according to any of claims 1 to 4,
**characterised in that**
a capacitor is wired in series or in parallel with the secondary winding such that the resonant frequency of the resonant circuit thus formed corresponds to the frequency of the alternating current impressed on the primary conductor.

6. Manufacturing facility according to any of claims 1 to 5,
**characterised in that**
the robot arm (2) comprises a gripping tool, wherein the gripping tool can be controlled by the controller.

7. Method for operating a manufacturing facility according to any of the preceding claims for producing a product, in particular a gear motor, out of a first component, in particular an electric motor (4), and a second, fixedly mounted component, in particular a gearing,
wherein the manufacturing facility comprises a robot arm (2) arranged on a vehicle (1) that in particular can travel on a floor of the manufacturing facility,
wherein a sensor ring (3) is connected to the robot arm (2) for guiding, in a manner requiring little force, a first component being held by the robot arm (2),
**characterised in that**
a first, second or third operating mode is selected using an input means such that, depending on the actuation of the input means,
- in a first method step, in the first operating mode, the vehicle (1) is operated autonomously together with the robot arm (2), in particular is controlled by the controller,
- in a second method step following the first method step, in the second operating mode, a human-guided operation is carried out such that the target position specified for the drive of the vehicle (1) is altered depending on the sensor signals from the sensor ring (3), wherein constant values are specified as the respective target positions of each drive of the robot arm (2), wherein the respective actual positions of each drive of the robot arm (2) when the input means is actuated for selecting the second operating mode are specified as the target positions of each drive of the robot arm (2),
- in a third method step following the second method step, in the third operating mode, a human-guided operation is carried out such that the respective target positions of each drive of the robot arm (2) are altered depending on the sensor signals from the sensor ring (3), wherein a brake of the vehicle (1) is applied or a constant value is specified as the target position for the drive of the vehicle (1), wherein the actual position of the drive of the vehicle (1) when the input means is actuated for selecting the third operating mode is specified as the target position of the drive of the vehicle (1),
wherein the first component being held is guided by means of the robot arm (2) towards the fixedly mounted second component and is centred thereon without any significant force being exerted, in order to connect, in particular screw-connect, the first component to the second component.

8. Method according to claim 7,
**characterised in that**
the drives of the robot arm (2) and/or the drive of the vehicle (1) is/are operated in closed-loop position control in the second and the third operating mode,
in particular therefore a respective target position is specified to each of the drives and the respective actual position of each drive is detected and controlled towards the target position, in particular by the drive generating a torque that is dependent on the progression over time of the difference between the actual position and the target position.

## Revendications

1. Installation de fabrication conçue pour fabriquer un produit, un motoréducteur en particulier, à partir d'un premier élément structurel se présentant notamment comme un moteur électrique (4), et d'un second élément structurel se présentant notamment comme un engrenage,
l'installation de fabrication étant équipée d'un bras de robot (2) implanté sur un véhicule (1) apte à se déplacer sur un sol de ladite installation de fabrication,
une bague détectrice (3) étant connectée au bras de robot (2) en vue du guidage, à force modeste, d'un premier élément structurel saisi par ledit bras de robot (2),
sachant que ledit premier élément structurel saisi peut être guidé, au moyen dudit bras de robot (2), vers un second élément structurel à montage fixe, sur lequel il peut être centré sans application de force notable,
notamment en vue de relier ledit premier élément structurel audit second élément structurel, en particulier par vissage,
**caractérisée par le fait que**
le véhicule (1) est muni d'un enroulement secondaire pouvant être couplé, par induction, à un conducteur primaire posé au sol, en vue de la transmission d'énergie électrique, notamment de la transmission d'énergie électrique par résonance,
lequel conducteur primaire est réalisé sous la forme d'un enroulement primaire, de sorte que ledit véhicule (1) peut être alimenté, par induction, uniquement dans une première zone spatiale à partir dudit conducteur primaire,
le véhicule (1) étant pourvu d'un accumulateur d'énergie, en vue d'alimenter ledit véhicule (1) à l'extérieur de ladite première zone spatiale,
lequel accumulateur d'énergie est un condensateur à double couche, notamment un Ultracap.

2. Installation de fabrication selon la revendication 1,
**caractérisée par le fait**
**qu'**une unité de reconnaissance d'images, implantée sur le véhicule (1), est connectée à la commande pilotant le bras de robot (2),
sachant, en particulier, qu'au moyen de ladite unité de reconnaissance d'images, un premier élément structurel peut être identifié et ledit bras de robot (2) peut, de la sorte, être piloté de façon correspondante pour saisir ledit premier élément structurel.

3. Installation de fabrication selon la revendication 1 ou 2,
**caractérisée par le fait que**
le bras de robot (2) comprend plusieurs entraînements connectés à la commande,
laquelle est agencée en vue de piloter le mouvement dudit bras de robot (2) et/ou un entraînement du véhicule (1).

4. Installation de fabrication selon l'une des revendications 1 à 3,
**caractérisée par le fait**
**qu'**elle est nantie d'un moyen d'entrée dévolu à l'actionnement sélectif de l'entraînement du véhicule (1), ou des entraînements du bras de robot (2),
sachant que, dans le cas d'une sélection de l'actionnement de l'entraînement du véhicule (1), ledit entraînement pilote ledit véhicule (1) vers un emplacement de consigne décalé en fonction du signal de la bague détectrice (3), et les entraînements du bras de robot (2) conservent leur emplacement respectif, notamment leur emplacement angulaire,
sachant que, dans le cas d'une sélection de l'actionnement des entraînements du bras de robot (2), ces entraînements sont pilotés vers un emplacement de consigne respectif, notamment un emplacement angulaire respectif décalé en fonction du signal de ladite bague détectrice (3), et l'entraînement dudit véhicule (1) conserve son emplacement, et/ou un frein dudit véhicule (1) est activé.

5. Installation de fabrication selon l'une des revendications 1 à 4,
**caractérisée par le fait**
**qu'**un condensateur est raccordé à l'enroulement secondaire, en série ou en parallèle, de façon telle que la fréquence de résonance du circuit résonant, ainsi formé, corresponde à la fréquence du courant alternatif injecté dans l'enroulement primaire.

6. Installation de fabrication selon l'une des revendications 1 à 5,
**caractérisée par le fait que**
le bras de robot (2) est doté d'un outil de préhension, lequel outil de préhension peut être piloté par la commande.

7. Procédé d'exploitation d'une installation de fabrication conforme à l'une des revendications précédentes, conçue pour fabriquer un produit, un motoréducteur en particulier, à partir d'un premier élément structurel se présentant notamment comme un moteur électrique (4), et d'un second élément structurel à montage fixe se présentant notamment comme un engrenage,
laquelle installation de fabrication est équipée d'un bras de robot (2) implanté sur un véhicule (1) notamment apte à se déplacer sur un sol de ladite installation de fabrication,
une bague détectrice (3) étant connectée au bras de robot (2) en vue du guidage, à force modeste, d'un premier élément structurel saisi par ledit bras de robot (2),
**caractérisé par le fait**
**qu'**un premier, deuxième ou troisième mode de fonctionnement est sélectionné à l'aide d'un moyen d'entrée, de telle sorte que, d'une manière tributaire de l'actionnement dudit moyen d'entrée,
- dans le premier mode de fonctionnement, au cours d'une première étape opératoire, le véhicule (1) soit actionné conjointement au bras de robot (2) de façon autonome, notamment piloté par la commande,
- dans le deuxième mode de fonctionnement, au cours d'une deuxième étape opératoire succédant, dans le temps, à la première étape opératoire, il s'opère une manoeuvre à conduite humaine telle que l'emplacement de consigne, préétabli pour l'entraînement du véhicule (1), est modifié en fonction des signaux de détection de la bague détectrice (3), des valeurs constantes étant alors préétablies en tant qu'emplacements de consigne respectifs des entraînements respectifs du bras de robot (2), sachant que les emplacements réels desdits entraînements respectifs du bras de robot (2), présents lors d'un actionnement du moyen d'entrée ciblant la sélection dudit deuxième mode de fonctionnement, sont préétablis en tant qu'emplacements de consigne desdits entraînements respectifs dudit bras de robot (2),
- dans le troisième mode de fonctionnement, au cours d'une troisième étape opératoire succédant, dans le temps, à la deuxième étape opératoire, il s'opère une manoeuvre à conduite humaine telle que les emplacements de consigne respectifs des entraînements respectifs du bras de robot (2) sont modifiés en fonction des signaux de détection de la bague détectrice (3), sachant qu'un frein du véhicule (1) est actionné, ou qu'une valeur constante est préétablie en tant qu'emplacement de consigne dédié à l'entraînement dudit véhicule (1), l'emplacement réel dudit entraînement du véhicule (1), présent lors d'un actionnement dudit moyen d'entrée ciblant la sélection dudit troisième mode de fonctionnement, étant alors préétabli en tant qu'emplacement de consigne dudit entraînement dudit véhicule (1),
auquel cas le premier élément structurel saisi est guidé, au moyen du bras de robot (2), vers le second élément structurel à montage fixe et est centré sur ce dernier, sans application de force notable, en vue de relier ledit premier élément structurel audit second élément structurel, en particulier par vissage.

8. Procédé selon la revendication 7,
**caractérisé par le fait que**,
dans les deuxième et troisième modes de fonctionnement, les entraînements du bras de robot (2) et/ou l'entraînement du véhicule (1) sont (est) actionné(s) avec régulation de positions,
sachant notamment, en conséquence, qu'un emplacement de consigne respectif est préétabli pour chacun desdits entraînements, et que l'emplacement réel respectif de l'entraînement considéré est détecté et régulé pour viser l'emplacement de consigne étant donné, en particulier, que ledit entraînement engendre un couple de rotation tributaire du profil temporel de la différence entre emplacement réel et emplacement de consigne.
